# EUROPEAN PATENT SPECIFICATION

(11) **EP 1 047 296 B1**
(45) Date of publication and mention of the grant of the patent: **17.04.2002**
(21) Application number: 99903140.4
(22) Date of filing: 15.01.1999
(51) Int. Cl.: A01B 59/06

(54) **IMPLEMENT ATTACHMENT MECHANISM AND METHOD**
GERÄTEANSCHLUSSMECHANISMUS UND -VERFAHREN
MECANISME DE FIXATION D'OUTILS ET PROCEDE CORRESPONDANT

(30) Priority: 16.01.1998 US 71689 P; 15.01.1999 US 233760
(43) Date of publication of application: 02.11.2000
(73) Proprietor: Carver, Brian R., Medina, OH 44256 (US)
(72) Inventor: CARVER, Brian, R., Medina, OH 44256 (US); DILGARD, Tim, Ashland, OH 44805 (US)
(74) Representative: Müller-Boré & Partner Patentanwälte
(86) International application number: US9900979
(87) International publication number: WO9935894

(56) References cited:
- WO-A-81/02086
- GB-A- 2 239 445
- US-A- 5 078 569
- US-A- 5 224 816
- US-A- 5 657 825
- US-A- 5 692 855

## Description

### Technical Field

This invention pertains to the art of methods and apparatuses for attaching implements to vehicles, and more specifically to methods and apparatuses for attaching implements to the front of a lawn and garden tractor.

### Background Art

It is well known in the art to attach implements to the front of a lawn and garden tractor. The implements can be of any type such as a snow plow, a snow blower, or the like. Some implements must be driven by the lawn tractor (such as a snow blower) while other implements must only be carried by the lawn tractor (such as a snow plow). Known implement attachment mechanisms, such as those disclosed in U.S. Patent Nos. 5,224,816 to Kaczmarczyk and 5,078,569 to Cook, have proven to be somewhat functional for their intended purpose.

A problem known in the art, including in the aforementioned patents, relates to the difficulty in attching an implement to a lawn tractor. In some applications, once the lawn tractor has been properly positioned with respect to the implement, the operator must get off the lawn tractor and manually perform several functions. These functions may include the insertion of connection pins that lock the implement to the lawn tractor, for example. In addition, the operator may have to adjust the position of the implement before such connection pins can be properly inserted. All such manual labor is cumbersome and time consuming.

What is needed is an easier way of attaching implements to a lawn tractor. The present invention provides methods and apparatuses that meet this need. The difficulties inherit in the art are therefore overcome in a way that is simple and efficient, while providing better and more advantageous results.

### Brief Description of the Drawings

The invention may take physical form in certain parts and arrangement of parts, a preferred embodiment of which will be described in detail in this specification and illustrated in the accompanying drawings that form a part hereof and wherein:
FIGURE 1 is an elevation view of a lawn tractor using the implement attachment mechanism of this invention to attach an implement.
FIGURE 2 is an assembly drawing of the hitch and bracket assembly of this invention.
FIGURE 3 is a perspective side view of the first side plate shown without the pin brace.
FIGURE 4 is a perspective back view of the implement showing the ramped area, the rod and the pin hole.
FIGURE 5 is an exploded side view of the pin showing a beveled engagement end.
FIGURE 6 is an exploded side view of the pin showing a spherical engagement end.

### Description of the Preferred Embodiment

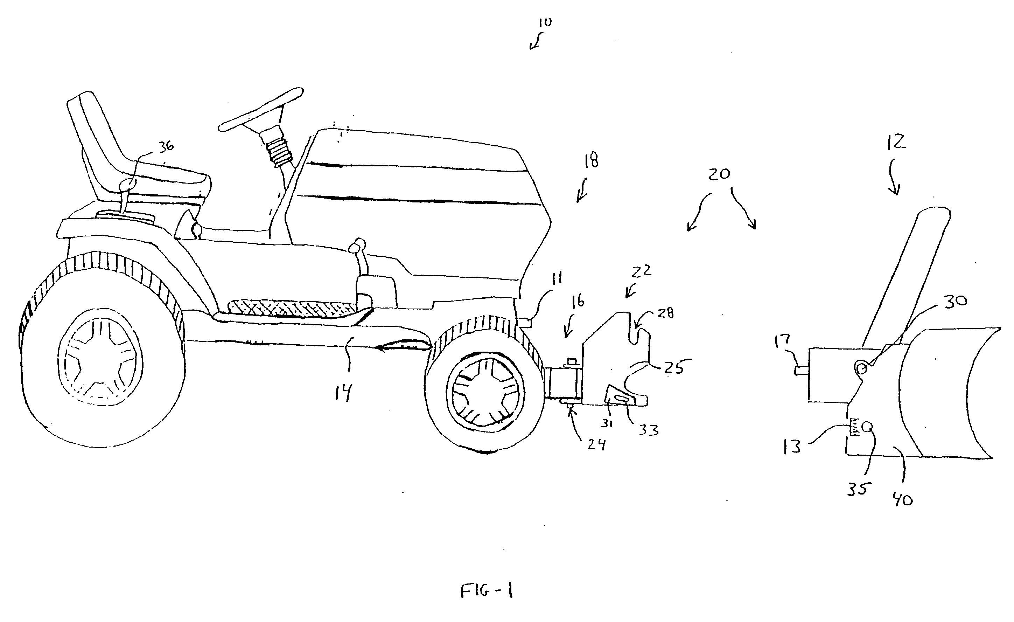

Referring now to the drawings wherein the showings are for purposes of illustrating a preferred embodiment of the invention only and not for purposes of limiting the same, FIGURE 1 shows a lawn tractor 10 using the implement attachment mechanism 20 of this invention to attach to an implement 12. It should be noted that although this embodiment is directed to a lawn tractor the invention is applicable to other vehicles and other applications as well. It should also be noted that the implement 12 can be any type of implement chosen with sound engineering judgement. For example, the implement may be a snow blower (as shown in FIGURE 1), a snow plow or the like. If the implement 12 must be driven by the lawn tractor 10 (such as a snow blower) it will include a drive shaft 17. The operation of the implement 12 is considered well known and thus will not be discussed further.

With continuing reference to FIGURE 1, the lawn tractor 10 has a frame 14, a bracket assembly 16 operatively connected to the frame 14 and lifting means 18 for selectively lifting the bracket assembly 16. The lifting means 18 can be of any type commonly known in the art that can both raise and lower the bracket assembly 16 and may include a lift lever 36 whereby the operator can operate the lifting means 18. The lawn tractor 10 may also have a PTO shaft 11 for use in operating the implement 12. The PTO shaft 11 is only required if the implement 12 must be driven.

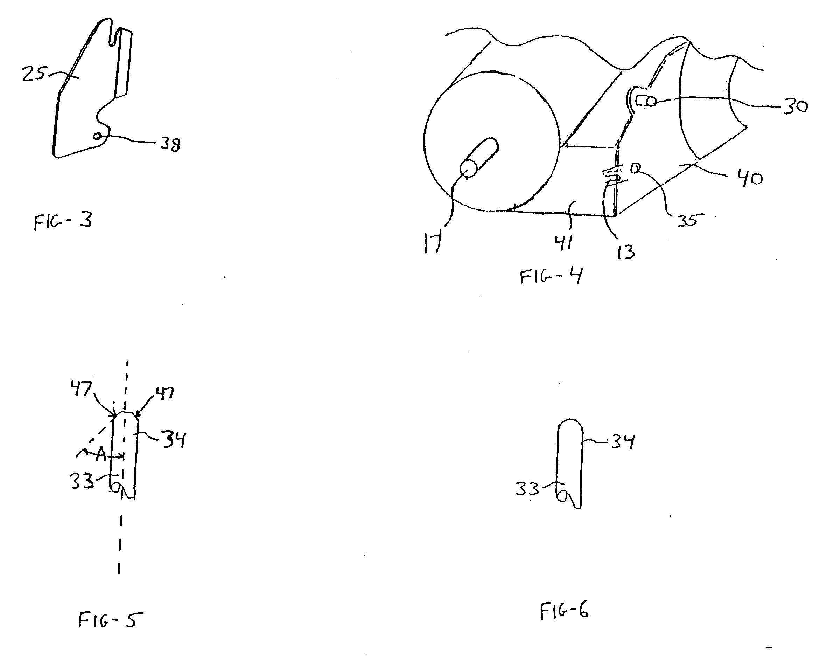

With reference now to FIGURES 1-4, the implement attachment mechanism 20 includes a hitch 22 that is operatively connected to the bracket assembly 16 by any means commonly known in the art, such as using a pivot bolt 24. The hitch 22 has first and second side plates, 25, 26 and a mid-section 27. Each side plate 25, 26 has a rod slot 28, 29 for receiving a rod 30 as will be discussed further below. Each side plate 25, 26 also has a pin brace 31 fixedly attached and having a pair of brace holes 43 for use in supporting later to be described pins 33. FIGURE 3 shows that behind the pin brace 31 a pin opening 38 is located in the first side plate 25 for selectively receiving the pin 33. The second side plate 26 is similarly constructed.

With reference now to FIGURES 1 and 4, the implement attachment mechanism 20 also includes the rod 30 that is fixedly mounted to a first side 40 of the implement 12. The implement 12 also has a second side 41. The rod 30 is selectively received within the rod slot 28 of the first side plate 25. Another rod (not shown) is similarly received within the rod slot 29 of the second side plate 26. A pin hole 35 is located on the first side 40 of the implement 12 for selective reception of one of the pins 33. The implement 12 also has a ramped area 13 that is used to ease the insertion of the pin 33 into the pin hole 35 on the implement 12. The ramped area 13 is a surface operatively connecting the first and second sides 40, 41 of the implement 12. It should be noted that the ramped area 13 is angled with respect to the first and second sides 40, 41. By angled it is meant that the ramped area 13 is not parallel to either the first side 40 or the second side 41. A second ramped area (not shown) is also preferably used and is similarly formed on the opposite end of the implement 12.

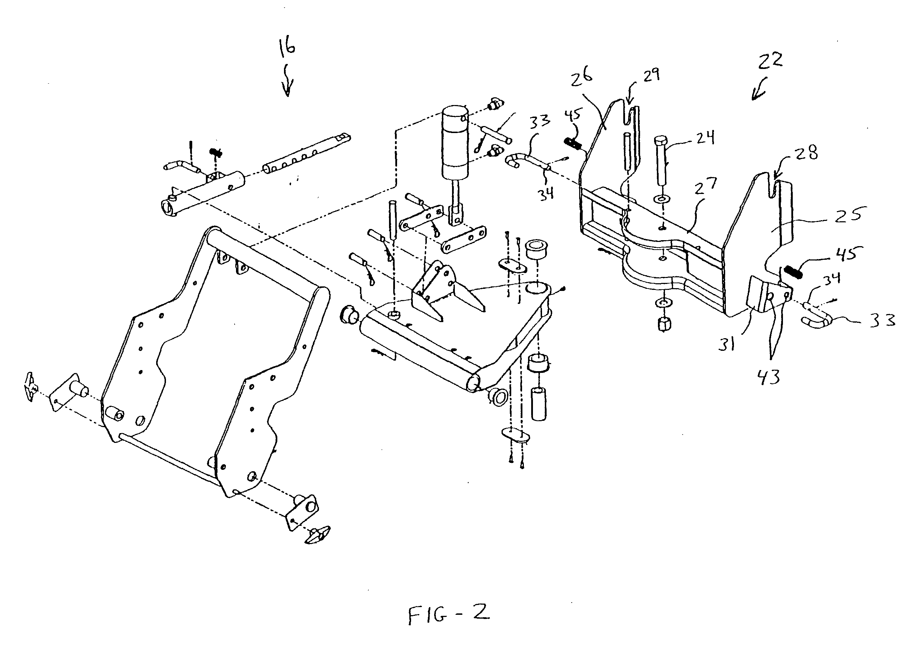

With reference now to FIGURES 1-6, the pins 33 can be of any type chosen with sound engineering judgement. In this embodiment, each pin 33 is a "J" shaped pin having an engagement end 34 that is operatively received within the pin openings 38 in the hitch 22 and the pin holes 35 in the implement 12. Preferably a spring 45 is used to bias each pin 33 toward the first pin opening 38. As indicated in FIGURE 2, each spring 45 preferably receives a pin 33 and preferably is positioned between each pin brace 31 and each side plate 25, 26 of the hitch 22. The engagement end 34 of the pin 33 may be of any shape chosen with sound engineering judgement. The engagement end 34 may have, for example, a beveled design. FIGURE 5 shows a beveled design including a beveled surface 47 that forms an angle A with the axis of the pin 33. In this case, it is preferred that the ramped area 13 be angled with respect to the first side 40 of the implement 12 at the same angle as the bevel of the engagement end 34. Thus, for example, if the angle A is 45°, it is preferred that the ramped area 13 be angled at 45 ° with respect to the first side 40 of the implement 12. In another embodiment, shown in FIGURE 6, the engagement end 34 may be spherically shaped. In this case, the angle of the ramped area 13 can be any angle chosen with sound engineering judgement.

With continuing reference to FIGURES 1-6, the manner in which the implement 12 is attached to the lawn tractor 10 will now be described. It should be noted that the pins 33 must be pre-positioned on the pin brace 31 such that the engagement ends 34 are extended through the pin openings 38 in the first and second end plates 25, 26. This is the condition shown in FIGURE 1. First, the operator moves (preferably by driving) the lawn tractor 10 toward the implement 12 until the rods 30 are inserted into the rod slots 28, 29 of the hitch 22. Next, the operator uses the lifting means 18 to lift the hitch 22 and thus the implement 12. As the implement 12 is lifted it pivots in a clockwise direction (as shown in FIGURE 1) about the rods 30. This forces the engagement ends 34 of the pins 33 to contact the ramped area 13 on the implement 12. The engagement ends 34 easily slide along the ramped areas 13 and are directed toward the pin holes 35 through which they are received. In this way the implement is "locked" to the hitch 22. If the implement 12 must be driven the operator would then couple the PTO shaft 11 to the drive shaft 17 of the implement 12.

Still referring to FIGURES 1-6, to remove the implement 12, the operator would first lower the implement 12 to the ground with the lifting means 18. Then the pins 33 are disengaged from the pin holes 35 on the implement 12. If the implement 12 is a driven type implement, the operator would also de-couple the PTO shaft 11 from the drive shaft 17. Next, the lawn tractor 10 and thus the hitch 22 is moved away from the implement 12. This movement removes the rods 30 from the rod slots 25, 26.

The preferred embodiments have been described, hereinabove. It will be apparent to those skilled in the art that the above methods may incorporate changes and modifications without departing from the general scope of this invention. It is intended to include all such modifications and alterations in so far as they come within the scope of the appended claims or the equivalents thereof.

Having thus described the invention, it is now claimed:

## Claims

1. An implement attachment mechanism (20) comprising a first pin (33), a vehicle (10), and an implement (12), the vehicle comprising a hitch (22) and lifting means (18) for use in lifting said hitch, said hitch (22) comprising a first pin opening (38) that selectively receives said first pin, said implement comprising a first pin hole (35) that selectively receives said first pin, the implement attachment mechanism being **characterized by**:
said first pin hole passing through and being substantially perpendicular to a first side (40) of said implement.

2. The implement attachrnent mechanism of claim 1 being further **characterized by**:
said first pin opening being substantially perpendicular to said first side (40) of said implement.

3. The implement attachment mechanism of claim 2 being further **characterized by**:
said first pin being substantially perpendicular to said first side (40) of said implement when said pin is received within said pin hole or said pin opening.

4. The implement attachment mechanism of claim 3 further comprising a pin brace (31) fixedly connected to said hitch, said pin brace comprising a pair of brace boles (43) for use in supporting said first pin to said hitch (22), a first spring (45) for use in biasing said first pin (33) toward said first pin opening (38), said first spring receiving said first pin, said first spring being positioned between said pin brace and said hitch, the implement attachment mechanism being further **characterized by**:
said brace holes being substantially perpendicular to said first side (40) of said implement; and,
said first spring being substantially perpendicular to said first side (40) of said implement.

5. The implement attachment mechanism of claim 1 being further **characterized by**:
said first pin being J shaped.

6. The implement attachment mechanism of claim 3 being further **characterized by**:
said first pin being J shaped.

7. The implement attachment mechanism of claim 4 further comprising a second pin, a second pin opening in said hitch that selectively receives said second pin, a sccond pin hole in said implement that selectively receives said second pin, a second pin brace fixedly connected to said hitch, said second pin brace comprising a second pair of brace holes for use in supporting said second pin to said high, a second spring for use in biasing said second pin toward said second pin opening, said second spring receiving said second pin, said second spring being positioned between said second pin brace and said hitch, said implement attachment mechanism being further **characterized by**:
said second pin hole passing through and being substantially perpendicular to a third side of said implement;
said second pin opening being substantially perpendicular to said third side of said implement:
said second pin being substantially perpendicular to said third side of said implement when said second pin is received within said second pin hole or said second pin opening;
said second brace holes being substantially perpendicular to said third side of said implememt; and,
said second spring being substantially perpendicular to said third side of said implement.

8. An implement attachment mechanism (20) comprising a first pin (33), a vehicle (10), and an implement (12), the vehicle comprising a hitch (22) and lifting means (18) for use in lifting said hitch, said hitch (22) comprising a first pin opening (38) that selectively receives said first pin, said implement comprising first (40) and second (41) sides and a first pin hole (35) that selectively receives said first pin, the implement attachment mechanism being **characterized by**:
a first ramp area (13) comprised within said implement at the intersection of said first and second sides of said implement, said first pin sliding along said first ramp area.

9. The implement attachment mechanism of claim 8 further comprising a second pin, a second pin opening in said hitch that selectively receives said second pin, a second pin hole in said implement that selectively receives said second pin, a third side of said implement that intersects said second side of said implement, the implement attachment mechanism being further **characterized by**:
a second ramp area comprised within said implement at the intersection of said second and third sides of said implement, said second pin sliding along said second ramp area.

10. The implement attachment mechanism of claim 8 further **characterized by**:
said first pin hole being substantially perpendicular to said first side (40) of said implement.

11. The implement attachment mechanism of claim 10 being further **characterized by**:
said first pin opening being substantially perpendicular to said first side (40) of said implement.

12. The implement attachment mechanism of claim 11 being further **characterized by**:
said first pin being substantially perpendicular to said first side (40) of said implement when said pin is received within said pin hole or said pin opening.

13. The implement attachment mechanism of claim 12 being further **characterized by**:
said first pin being J shaped.

14. The implement attachment mechanism of claim 8 further comprising a pin brace (31) fixedly connected to said hitch, said pin brace comprising a pair of brace holes (43) for use in supporting said first pin to said hitch (22), a first spring (45) for use in biasing said first pin (33) toward said first pin opening (38), said first spring receiving said first pin, said first spring being positioned between said pin brace and said hitch, the implement attachment mechanism being further **characterized by**:
said brace holes being substantially perpendicular to said first side (40) of said implement; and,
said first spring being substantially perpendicular to said first side (40) of said implement.

15. The implement attachment mechanism of claim 14 further comprising a second pin, a second pin opening in said hitch that selectively receives said second pin, a second pin hole in said implement that selectively receives sad second pin, a third side of said implement that intersects said second side of said implement, a second pin brace fixedly connected to said hitch, said second pin brace comprising a second pair of brace holes for use in supporting said second pin to said hitch, a second spring for use in biasing said second pin toward said second pin opening, said second spring receiving said second pin. said second spring being positioned between said second pin brace and said hitch, the implement attachment mechanism being further **characterized by**:
a second ramp area comprised within said implement at the intersection of said second and third sides of said implement, said second pin sliding along said second ramp area;
said second pin hole passing through and being substantially perpendicular to a third side of said implement;
said second pin opening being substantially perpendicular to said third side of said implement;
said second pin being substantially perpendicular to said third side of said implement when said second pin is received within said second pin hole or said second pin opening;
said second brace holes being substantially perpendicular to said third side of said implement; and,
said second spring being substantially perpendicular to said third side of said implement.

16. The implement attachment mechanism of claim 15 being further **characterized by**:
said first and second pins being J shaped.

17. A method for attaching an implement to a vehicle including the step of providing a vehicle (10) comprising lifting means (18) for use in lifting a hitch, the method being **characterized by** the steps of:
providing an implement (12) comprising a first pin hole (35) which passes through and is substantially perpendicular to a first side (40) of the implement;
providing a hitch comprising a first pin opening (38) substantially perpendicular to the first side (40) of the implement,
inserting a first pin (33) through the first pin opening (38) in the hitch substantially perpendicular to the first side of the implement; and,
inserting the first pin through the first pin hole in the implement substantially perpendicular to the first side of the implement.

18. The method of claim 17 wherein the implement further comprises a second side (41) and a first ramp area comprised within the implement at the intersection of the first and second sides of the implement, before the step of inserting the first pin through the first pin hole in the implement substantially perpendicular to the first side of the implement, the method being further **characterized by** the step of:
sliding the first pin along the first ramp area toward the first pin hole.

19. The method of claim 18 further comprising the step of removing the implement (12) from the vehicle, this step comprising the steps of:
disengaging the first pin (33) from the first pin hole (35) in the implement, and,
sliding the first pin along the first ramp area away from the first pin hole.

20. The method of claim 19 wherein the implement further comprises a third side and a second ramp area comprised within the implement at the intersection of the second and third sides of the implement, the method being further **characterized by** the steps of:
providing the implement (12) which further comprises a second pin hole (35) which passes through and is substantially perpendicular to the third side (40) of the implement;
providing the hitch which further comprises a second pin opening (38) substantially perpendicular to the third side (40) of the implement;
inserting a second pin (33) through the second pin opening (38) in the hitch substantially perpendicular to the third side of the implement;
sliding the first pin along the first ramp area toward the first pin hole.
inserting the second pin through the second pin hole in the implement substantially perpendicular to the third side of the implement; and,
the step of removing the implement (12) from the vehicle being further **characterized by** the steps of:
disengaging the second pin (33) from the second pin hole (35) in the implement; and,
sliding the second pin along the second ramp area away from the second pin hole.

## Patentansprüche

1. Geräteanschlußmechanismus (20) aufweisend einen ersten Bolzen bzw. Stift (33), ein Fahrzeug (10), und ein Gerät bzw. Werkzeug (12), wobei das Fahrzeug eine Zugvorrichtung bzw. Haken (22) und Hebemittel (18) zum Anheben der Zugvorrichtung aufweist, wobei die Zugvorrichtung (22) eine erste Stiftöffnung (38) aufweist, welche den ersten Stift selektiv aufnimmt, wobei das Werkzeug ein erstes Stiftloch (35) aufweist, welches den ersten Stift selektiv aufnimmt, wobei der Geräteanschlußmechanismus **gekennzeichnet ist durch**:
Das erste Stiftloch geht **durch** und ist im wesentlichen senkrecht zu einer ersten Seite (40) des Werkzeugs.

2. Geräteanschlußmechanismus nach Anspruch 1, weiterhin **gekennzeichnet durch**:
Die erste Stiftöffnung ist im wesentlichen senkrecht zur ersten Seite (40) des Werkzeugs.

3. Geräteanschlußmechanismus nach Anspruch 2, weiterhin **gekennzeichnet durch**:
Der erste Stift ist im wesentlichen senkrecht zur ersten Seite (40) des Werkzeugs, wenn der Stift in dem Stiftloch oder in der Stiftöffnung aufgenommen ist.

4. Geräteanschlußmechanismus nach Anspruch 3, weiterhin aufweisend eine Stiftstrebe bzw. -stütze (31), welche befestigbar bzw. fest an der Zugvorrichtung verbunden ist, wobei die Stiftstütze ein Paar Stützlöcher (43), zum Stützen bzw. Unterstützen des ersten Stifts an der Zugvorrichtung (22) aufweist, eine erste Feder (45) zum Vorspannen des ersten Stifts (33) zu der ersten Stiftöffnung (38), wobei die erste Feder den ersten Stift aufnimmt, und wobei die erste Feder zwischen der Stiftstütze und der Zugvorrichtung positioniert ist, wobei der Geräteanschlußmechanismus weiterhin **gekennzeichnet ist durch**:
Die Stützlöcher sind im wesentlichen senkrecht zu der ersten Seite (40) des Werkzeugs; und,
die erste Feder ist im wesentlichen senkrecht zu der ersten Seite (40) des Werkzeugs.

5. Geräteanschlußmechanismus nach Anspruch 1, weiterhin **gekennzeichnet durch**:
Der erste Stift ist J-förmig.

6. Geräteanschlußmechanismus nach Anspruch 3, weiterhin **gekennzeichnet durch**:
Der erste Stift ist J-förmig.

7. Geräteanschlußmechanismus nach Anspruch 4, weiterhin aufweisend einen zweiten Stift, eine zweite Stiftöffnung in der Zugvorrichtung, welche den zweiten Stift selektiv aufnimmt, ein zweites Stiftloch in dem Werkzeug, welches den zweiten Stift selektiv aufnimmt, eine zweite Stiftstütze, welche befestigbar bzw. fest mit der Zugvorrichtung verbunden ist, wobei die zweite Stiftstütze ein zweites Paar Stützlöcher, zum Stützen bzw. Unterstützen des zweiten Stifts an der Zugvorrichtung aufweist, eine zweite Feder zum Vorspannen des zweiten Stifts zur zweiten Stiftöffnung, wobei die zweite Feder den zweiten Stift aufnimmt, die zweite Feder zwischen der zweiten Stiftstütze und der Zugvorrichtung positioniert ist, und der Geräteanschlußmechanismus weiterhin **gekennzeichnet ist durch**:
Das zweite Stiftloch geht **durch** und ist im wesentlichen senkrecht zu einer dritten Seite des Werkzeugs;
die zweite Stiftöffnung ist im wesentlichen senkrecht zu der dritten Seite des Werkzeugs;
der zweite Stift ist im wesentlichen senkrecht zu der dritten Seite des Werkzeugs, wenn der zweite Stift im zweiten Stiftloch oder der zweiten Stiftöffnung aufgenommen ist;
die zweiten Stützlöcher sind im wesentlichen senkrecht zu der dritten Seite des Werkzeugs; und,
die zweite Feder ist im wesentlichen senkrecht zu der dritten Seite des Werkzeugs.

8. Geräteanschlußmechanismus (20) aufweisend einen ersten Stift (33), ein Fahrzeug (10), und ein Werkzeug (12), wobei das Fahrzeug eine Zugvorrichtung (22) und Anhebemittel (18) zum Anheben der Zugvorrichtung aufweist, wobei die Zugvorrichtung (22) eine erste Stiftöffnung (38) aufweist, welche selektiv den ersten Stift aufnimmt, wobei das Werkzeug erste (40) und zweite (41) Seiten und ein erstes Stiftloch (35) aufweist, welches den ersten Stift selektiv aufnimmt, wobei der Geräteanschlußmechanismus **gekennzeichnet ist durch**:
einen ersten Rampen- bzw. Abschrägungsbereich (13), welcher im Werkzeug an dem Schnittpunkt der ersten und zweiten Seiten des Werkzeugs aufgenommen ist, wobei der erste Stift entlang dem ersten Abschrägungsbereich gleitet.

9. Geräteanschlußmechanismus nach Anspruch 8, weiterhin aufweisend einen zweiten Stift, eine zweite Stiftöffnung in der Zugvorrichtung, welche den zweiten Stift selektiv aufnimmt, ein zweites Stiftloch in dem Werkzeug, welches den zweiten Stift selektiv aufnimmt, eine dritte Seite des Werkzeugs, welche die zweite Seite des Werkzeugs schneidet, wobei der Geräteanschlußmechanismus weiterhin **gekennzeichnet ist durch**:
Einen zweiten Abschrägungs- bzw. Rampenbereich, welcher in dem Werkzeug am Schnittpunkt der zweiten und dritten Seiten des Werkzeugs enthalten ist, wobei der zweite Stift entlang des zweiten Abschrägungsbereichs gleitet.

10. Geräteanschlußmechanismus nach Anspruch 8, weiterhin **gekennzeichnet durch**:
Das erste Stiftloch ist im wesentlichen senkrecht zu der ersten Seite (40) des Werkzeugs.

11. Geräteanschlußmechanismus nach Anspruch 10, weiterhin **gekennzeichnet durch**:
die erste Stiftöffnung ist im wesentlichen senkrecht zu der ersten Seite (40) des Werkzeugs.

12. Geräteanschlußmechanismus nach Anspruch 11, weiterhin **gekennzeichnet durch**:
der erste Stift ist im wesentlichen senkrecht zu der ersten Seite (40) des Werkzeugs, wenn der Stift in dem Stiftloch oder der Stiftöffnung aufgenommen ist.

13. Geräteanschlußmechanismus nach Anspruch 12, weiterhin **gekennzeichnet durch**:
Der erste Stift ist J-förmig.

14. Geräteanschlußmechanismus nach Anspruch 8, weiterhin aufweisend eine Stiftstütze (31), welche befestigbar bzw. fest an der Zugvorrichtung verbunden ist, wobei die Stiftstütze ein Paar Stützlöcher (43) zum Stützen des ersten Stifts in der Zugvorrichtung (22) aufweist, eine erste Feder (45) zum Vorspannen des ersten Stifts (33) zu der ersten Stiftöffnung (38), wobei die erste Feder den ersten Stift aufnimmt, die erste Feder zwischen der Stiftstütze und der Zugvorrichtung positioniert ist, und der Geräteanschlußmechanismus weiterhin **gekennzeichnet ist durch**:
Die Stützlöcher im wesentlichen senkrecht zu der ersten Seite (40) des Werkzeugs sind; und,
die erste Feder im wesentlichen senkrecht zu der ersten Seite (40) des Werkzeugs ist.

15. Geräteanschlußmechanismus nach Anspruch 14, weiterhin aufweisend einen zweiten Stift, eine zweite Stiftöffnung in der Zugvorrichtung, welche den zweiten Stift selektiv aufnimmt, ein zweites Stiftloch in dem Werkzeug, welches den zweiten Stift selektiv aufnimmt, eine dritte Seite des Werkzeugs, welche die zweite Seite des Werkzeugs schneidet, eine zweite Stiftstütze, welche befestigbar an der Zugvorrichtung verbunden ist, wobei die zweite Stiftstütze ein zweites Paar Stützlöcher zum Stützen des zweiten Stifts an der Zugvorrichtung aufweist, eine zweite Feder zum Vorspannen des zweiten Stifts zu der zweiten Stiftöffnung, wobei die zweite Feder den zweiten Stift aufnimmt, die zweite Feder zwischen der zweiten Stiftstütze und der Zugvorrichtung positioniert ist, und wobei der Geräteanschlußmechanismus weiterhin **gekennzeichnet ist durch**:
ein zweiter Abschrägungs- bzw. Rampenbereich, der in dem Werkzeug am Schnittpunkt der zweiten und dritten Seiten des Werkzeugs enthalten ist, wobei der zweite Stift entlang des zweiten Abschrägungsbereichs gleitet;
das zweite Stiftloch geht **durch** und ist im wesentlichen senkrecht zu einer dritten Seite des Werkzeugs;
die zweite Stiftöffnung ist im wesentlichen senkrecht zu der dritten Seite des Werkzeugs;
der zweite Stift ist im wesentlichen senkrecht zu der dritten Seite des Werkzeugs, wenn der zweite Stift im zweiten Stiftloch oder der zweiten Stiftöffnung enthalten ist;
die zweiten Stützlöcher sind im wesentlichen senkrecht zu der dritten Seite des Werkzeugs; und,
die zweite Feder ist im wesentlichen senkrecht zu der dritten Seite des Werkzeugs.

16. Geräteanschlußmechanismus nach Anspruch 15, weiterhin **gekennzeichnet durch**:
Die ersten und zweiten Stifte sind J-förmig.

17. Verfahren zum Befestigen eines Werkzeugs an ein Fahrzeug beinhaltend den Schritt des zur Verfügung Stellens eines Fahrzeugs (10) aufweisend Anhebemittel (18) zum Anheben einer Zugvorrichtung, wobei das Verfahren weiterhin **gekennzeichnet ist durch** die Schritte:
Vorsehen eines Werkzeugs (12), welches ein erstes Stiftloch (35) aufweist,
welches **durch** eine erste Seite (40) des Werkzeugs geht und im wesentlichen senkrecht dazu ist;
Vorsehen einer Zugvorrichtung, welche eine erste Stiftöffnung (38) im wesentlichen senkrecht zu der ersten Seite (40) des Werkzeugs aufweist,
Einfügen eines ersten Stifts (33) **durch** die erste Stiftöffnung (38) in der Zugvorrichtung im wesentlichen senkrecht zu der ersten Seite des Werkzeugs; und,
Einfügen des ersten Stifts **durch** das erste Stiftloch in dem Werkzeug im wesentlichen senkrecht zu der ersten Seite des Werkzeugs.

18. Verfahren nach Anspruch 17, worin das Werkzeug weiterhin eine zweite Seite (41) und eine ersten Abschrägungs- bzw. Rampenbereich aufweist, welcher im Werkzeug am Schnittpunkt der ersten und zweiten Seiten der Werkzeugs enthalten ist, wobei vor dem Schritt des Einfügens des ersten Stifts durch das Stiftloch in das Werkzeug im wesentlichen senkrecht zu der ersten Seite des Werkzeugs, das Verfahren weiterhin durch den Schritt gekennzeichnet ist:
Gleiten des ersten Stifts entlang des ersten Abschrägungsbereichs zu dem ersten Stiftloch.

19. Verfahren nach Anspruch 18 weiterhin aufweisend den Schritt
Entfernen des Werkzeugs (12) vom Fahrzeug, wobei dieser Schritt die Schritte aufweist:
Aus dem Eingriff Bringen bzw. Lösen des ersten Stifts (33) vom ersten Stiftloch (35) im Werkzeug; und,
Gleiten des ersten Stifts entlang des ersten Abschrägungsbereichs weg vom ersten Stiftloch.

20. Verfahren nach Anspruch 19, worin das Werkzeug weiterhin eine dritte Seite und einen zweiten Abschrägungs- bzw. Rampenbereich aufweist, welcher im Werkzeug am Schnittpunkt der zweiten und dritten Seiten des Werkzeugs enthalten ist, wobei das Verfahren weiterhin durch die Schritte gekennzeichnet ist:
Vorsehen des Werkzeugs (12), welches weiterhin ein zweites Stiftloch (35) aufweist, welches durch die dritte Seite (40) des Werkzeugs geht und im wesentlichen senkrecht dazu ist;
Vorsehen der Zugvorrichtung, welche weiterhin eine zweite Stiftöffnung (38) im wesentlichen senkrecht zu der dritten Seite (40) des Werkzeugs aufweist;
Einfügen eines zweiten Stifts (33) durch die zweite Stiftöffnung (38) in der Zugvorrichtung im wesentlichen senkrecht zu der dritten Seite des Werkzeugs;
Gleiten des ersten Stifts entlang des ersten Abschrägungs- bzw. Rampenbereichs zu dem ersten Stiftloch,
Einfügen des zweiten Stifts durch das zweite Stiftloch in dem Werkzeug im wesentlichen senkrecht zu der dritten Seite des Werkzeugs; und
der Entfernungsschritt des Werkzeugs (12) vöm Fahrzeug weiterhin **gekennzeichnet durch** die Schritte ist:
Aus dem Eingriff Bringen bzw. Lösen des zweiten Stifts (33) aus dem zweiten Stiftloch (35) in dem Werkzeug; und,
Gleiten des zweiten Stifts entlang des zweiten Abschrägungsbereichs weg vom zweiten Stiftloch.

## Revendications

1. Mécanisme (20) de montage d'instrument comportant une première broche (33), un véhicule (10) et un instrument (12), le véhicule comportant un attelage (22) et un moyen élévateur (18) destiné à être utilisé pour élever ledit attelage, ledit attelage (22) comportant une première ouverture (38) de broche qui reçoit sélectivement ladite première broche, ledit instrument présentant un premier trou (35) de broche qui reçoit sélectivement ladite première broche, le mécanisme de montage d'instrument étant **caractérisé par le fait que** :
ledit premier trou de broche passe à travers un premier côté (40) dudit instrument et est sensiblement perpendiculaire à ce premier côté.

2. Mécanisme de montage d'instrument selon la revendication 1, **caractérisé en outre par le fait que** :
ladite première ouverture de broche est sensiblement perpendiculaire audit premier côté (40) dudit instrument.

3. Mécanisme de montage d'instrument selon la revendication 2, **caractérisé en outre par le fait que** :
ladite première broche est sensiblement perpendiculaire audit premier côté (40) dudit instrument lorsque ladite broche est reçue dans ledit trou de broche ou ladite ouverture de broche.

4. Mécanisme de montage d'instrument selon la revendication 3, comportant en outre une patte (31) de broche reliée fixement audit attelage, ladite patte de broche présentant deux trous (43) de patte destinés à être utilisés pour supporter ladite première broche sur ledit attelage (22), un premier ressort (45) destiné à être utilisé pour appeler ladite première broche (33) vers ladite première ouverture (38) de broche, ledit premier ressort recevant ladite première broche, ledit premier ressort étant positionné entre ladite patte de broche et ledit attelage, le mécanisme de montage d'instrument étant en outre **caractérisé par le fait que** :
lesdits trous de la patte sont sensiblement perpendiculaires audit premier côté (40) dudit instrument ; et
ledit premier ressort est sensiblement perpendiculaire audit premier côté (40) dudit instrument.

5. Mécanisme de montage d'instrument selon la revendication 1, **caractérisé en outre par le fait que** :
ladite première broche est en forme de J.

6. Mécanisme de montage d'instrument selon la revendication 3, **caractérisé en outre par le fait que** :
ladite première broche est en forme de J.

7. Mécanisme de montage d'instrument selon la revendication 4, comportant en outre une seconde broche, une seconde ouverture de broche dans ledit attelage qui reçoit sélectivement ladite seconde broche, un second trou de broche dans ledit instrument qui reçoit sélectivement ladite seconde broche, une seconde patte de broche reliée fixement audit attelage, ladite seconde patte de broche présentant une seconde paire de trous de patte destinés à être utilisés pour supporter ladite seconde broche sur ledit attelage, un second ressort destiné à être utilisé pour appeler ladite broche vers ladite seconde ouverture de broche, ledit second ressort recevant ladite seconde broche, ledit second ressort étant positionné entre ladite seconde patte de broche et ledit attelage, ledit mécanisme de montage d'instrument étant en outre **caractérisé par le fait que** :
ledit second trou de broche passe à travers un troisième côté dudit instrument et est sensiblement perpendiculaire à ce troisième côté ;
ladite seconde ouverture de broche est sensiblement perpendiculaire audit troisième côté dudit instrument ;
ladite seconde broche est sensiblement perpendiculaire audit troisième côté dudit instrument lorsque ladite seconde broche est reçue dans ledit second trou de broche ou dans ladite seconde ouverture de broche ;
lesdits trous de la seconde patte sont sensiblement perpendiculaires audit troisième côté dudit instrument ; et
ledit second ressort est sensiblement perpendiculaire audit troisième côté dudit instrument.

8. Mécanisme (20) de montage d'instrument comportant une première broche (33), un véhicule (10) et un instrument (12), le véhicule comportant un attelage (22) et un moyen élévateur (18) destiné à être utilisé pour élever ledit attelage, ledit attelage (22) présentant une première ouverture (38) de broche qui reçoit sélectivement ladite première broche, ledit instrument comportant des premier (40) et deuxième (41) côtés et un premier trou (35) de broche qui reçoit sélectivement ladite première broche, le mécanisme de montage d'instrument étant **caractérisé par le fait que** :
une première zone en rampe (13) est constituée dans ledit instrument à l'intersection desdits premier et deuxième côtés dudit instrument, ladite première broche glissant le long de ladite première zone en rampe.

9. Mécanisme de montage d'instrument selon la revendication 8, comportant en outre une seconde broche, une seconde ouverture de broche dans ledit attelage qui reçoit sélectivement ladite seconde broche, un second trou de broche dans ledit instrument qui reçoit sélectivement ladite seconde broche, un troisième côté dudit instrument qui intersecte ledit deuxième côté dudit instrument, le mécanisme de montage d'instrument étant en outre **caractérisé par le fait que** :
une seconde zone en rampe est constituée à l'intérieur dudit instrument à l'intersection desdits deuxième et troisième côtés dudit instrument, ladite seconde broche glissant le long de ladite seconde zone en rampe.

10. Mécanisme de montage d'instrument selon la revendication 8, **caractérisé en outre par le fait que** :
ledit premier trou de broche est sensiblement perpendiculaire audit premier côté (40) dudit instrument.

11. Mécanisme de montage d'instrument selon la revendication 10, **caractérisé en outre par le fait que** :
ladite première ouverture de broche est sensiblement perpendiculaire audit premier côté (40) dudit instrument.

12. Mécanisme de montage d'instrument selon la revendication 11, **caractérisé en outre par le fait que** :
ladite première broche est sensiblement perpendiculaire audit premier côté (40) dudit instrument lorsque ladite broche est reçue dans ledit trou de broche ou dans ladite ouverture de broche.

13. Mécanisme de montage d'instrument selon la revendication 12, **caractérisé en outre par le fait que** :
ladite première broche est en forme de J.

14. Mécanisme de montage d'instrument selon la revendication 8, comportant en outre une patte (31) de broche reliée fixement audit attelage, ladite patte de broche présentant une paire de trous (43) de patte destinés à être utilisés pour supporter ladite première broche sur ledit attelage (22), un premier ressort (45) destiné à être utilisé pour appeler ladite première broche (33) vers ladite première ouverture (38) de broche, ledit premier ressort recevant ladite première broche, ledit premier ressort étant positionné entre ladite patte de broche et ledit attelage, le mécanisme de montage d'instrument étant en outre **caractérisé par le fait que** :
lesdits trous de la patte sont sensiblement perpendiculaires audit premier côté (40) dudit instrument ; et
ledit premier ressort est sensiblement perpendiculaire audit premier côté (40) dudit instrument.

15. Mécanisme de montage d'instrument selon la revendication 14, comportant en outre une seconde broche, une seconde ouverture de broche dans ledit attelage qui reçoit sélectivement ladite seconde broche, un second trou de broche dans ledit instrument qui reçoit sélectivement ladite seconde broche, un troisième côté dudit instrument qui intersecte ledit deuxième côté dudit instrument, une seconde patte de broche reliée fixement audit attelage, ladite seconde patte de broche présentant une seconde paire de trous de patte destinés à être utilisés pour supporter ladite seconde broche sur ledit attelage, un second ressort destiné à être utilisé pour appeler ladite seconde broche vers ladite seconde ouverture de broche, ledit second ressort recevant ladite seconde broche, ledit second ressort étant positionné entre ladite seconde patte de broche et ledit attelage, le mécanisme de montage d'instrument étant en outre **caractérisé par le fait que** :
une seconde zone en rampe est constituée à l'intérieur dudit instrument à l'intersection desdits deuxième et troisième côtés dudit instrument, ladite seconde broche glissant le long de ladite seconde zone en rampe ;
ledit second trou de broche passe à travers un troisième côté dudit instrument et est sensiblement perpendiculaire à ce troisième côté ;
ladite seconde ouverture de broche est sensiblement perpendiculaire audit troisième côté dudit instrument ;
ladite seconde broche est sensiblement perpendiculaire audit troisième côté dudit instrument lorsque ladite seconde broche est reçue dans ledit second trou de broche ou ladite seconde ouverture de broche ;
lesdits trous de la seconde patte sont sensiblement perpendiculaires audit troisième côté dudit instrument ; et
ledit second ressort est sensiblement perpendiculaire audit troisième côté dudit instrument.

16. Mécanisme de montage d'instrument selon la revendication 15, **caractérisé en outre par le fait que** :
lesdites première et seconde broches sont en forme de J.

17. Procédé de montage d'un instrument sur un véhicule, comprenant l'étape d'utilisation d'un véhicule (10) comportant un moyen élévateur (18) destiné à être utilisé pour élever un attelage, le procédé étant **caractérisé par** les étapes dans lesquelles :
on se procure un instrument (12) présentant un premier trou (35) de broche qui passe à travers un premier côté (40) de l'instrument et est sensiblement perpendiculaire à ce premier côté ;
on se procure un attelage présentant une première ouverture (38) de broche sensiblement perpendiculaire au premier côté (40) de l'instrument ;
on introduit une première broche (33) à travers la première ouverture (38) de broche dans l'attelage sensiblement perpendiculaire au premier côté de l'instrument ; et
on introduit la première broche dans le premier trou de broche dans l'instrument sensiblement perpendiculaire au premier côté de l'instrument.

18. Procédé selon la revendication 17, dans lequel l'instrument comporte en outre un deuxième côté (41) et une première zone en rampe constituée à l'intérieur de l'instrument à l'intersection des premier et deuxième côtés de l'instrument, avant l'étape d'introduction de la première broche dans le premier trou de broche dans l'instrument sensiblement perpendiculaire au premier côté de l'instrument, le procédé étant en outre **caractérisé par** l'étape de :
glissement de la première broche le long de la première zone en rampe vers le premier trou de broche.

19. Procédé selon la revendication 18, comprenant en outre l'étape d'enlèvement de l'instrument (12) du véhicule, cette étape comprenant les étapes dans lesquelles :
on dégage la première broche (33) du premier trou de broche (35) dans l'instrument ; et
on fait glisser la première broche le long de la première zone en rampe en l'éloignant du premier trou de broche.

20. Procédé selon la revendication 19, dans lequel l'instrument comporte en outre un troisième côté et une seconde zone en rampe constituée à l'intérieur de l'instrument à l'intersection des deuxième et troisième côtés de l'instrument, le procédé étant en outre **caractérisé par** les étapes dans lesquelles :
on utilise l'instrument (12) qui présente en outre un second trou (35) de broche qui passe à travers le troisième côté (40) de l'instrument et est sensiblement perpendiculaire à ce troisième côté ;
on utilise l'attelage qui présente en outre une seconde ouverture (38) de broche sensiblement perpendiculaire au troisième côté (40) de l'instrument ;
on introduit une seconde broche (33) dans la seconde ouverture (38) de broche dans l'attelage sensiblement perpendiculaire au troisième côté de l'instrument ;
on fait glisser la première broche le long de la première zone en rampe vers le premier trou de broche ;
on introduit la seconde broche dans le second trou de broche dans l'instrument sensiblement perpendiculaire au troisième côté de l'instrument ; et
l'étape d'enlèvement de l'instrument (12) du véhicule étant en outre **caractérisée par** les étapes dans lesquelles :
on dégage la seconde broche (33) du second trou (35) de broche de l'instrument ; et
on fait glisser la seconde broche le long de la seconde zone en rampe en l'éloignant du second trou de broche.
